# EUROPÄISCHE PATENTSCHRIFT

(11) **EP 3 436 208 B1**
(45) Veröffentlichungstag und Bekanntmachung des Hinweises auf die Patenterteilung: **26.02.2020**
(21) Anmeldenummer: 17714679.2
(22) Anmeldetag: 27.03.2017
(51) Int. Cl.: B21D 53/12, B21D 22/16, F16C 33/38, F16D 3/22, B23P 15/00

(54) **VERFAHREN ZUR HERSTELLUNG EINES EINE NABE AUFWEISENDEN FORMKÖRPERS SOWIE VORRICHTUNG ZUR DURCHFÜHRUNG DES VERFAHRENS**
METHOD FOR PRODUCING A MOULDED BODY COMPRISING A HUB AND DEVICE FOR CARRYING OUT THE METHOD
PROCÉDÉ DE FABRICATION D'UN CORPS MOULÉ COMPORTANT UN MOYEU ET DISPOSITIF PERMETTANT DE METTRE EN OEUVRE UN TEL PROCÉDÉ

(30) Priorität: 30.03.2016 DE 102016105771
(43) Veröffentlichungstag der Anmeldung: 06.02.2019
(73) Patentinhaber: WF Maschinenbau- und Blechformtechnik GmbH & Co. KG, 48324 Sendenhorst (DE); ThyssenKrupp Steel Europe AG, 47166 Duisburg (DE)
(72) Erfinder: FRIESE, Udo, 59227 Ahlen (DE); GROßERÜSCHKAMP, Thomas, 47119 Duisburg (DE)
(74) Vertreter: Specht, Peter
(86) Internationale Anmeldenummer: PCT/EP2017/057170
(87) Internationale Veröffentlichungsnummer: WO 2017/167678

(56) Entgegenhaltungen:
- EP-A1- 0 358 784
- DE-A1-102013 106 268
- DE-B3-102013 101 555
- US-A- 5 970 776

## Beschreibung

Die Erfindung betrifft ein Verfahren zur Herstellung eines eine Nabe und ein sich axial daran anschließendes, glockenförmiges Unterteil aufweisenden Formkörpers nach dem Oberbegriff des Anspruchs 1.

Derartige Formkörper finden insbesondere als Achs- oder Gelenkzapfen Verwendung und sind Bestandteil eines Verbindungsgelenks, um Drehmomente an winklig zueinander stehenden Bauteilen, vornehmlich Wellen, zu übertragen.

Ein Verfahren entsprechend der Gattung ist beispielsweise in der DE 10 2013 101 555 B3 offenbart.

Darin wird vorgeschlagen, den aus Metall, insbesondere Stahl bestehenden Formkörper aus einem Rohr als Halbzeug herzustellen, unter Ausbildung einer angeformten Nabe sowie ein sich daran anschließendes glockenförmiges Unterteil, mit einer Innenkontur.

Diese Innenkontur besteht aus umfänglich wechselweise angeordneten Kugellaufbahnen und Käfigbahnen, die in Achsrichtung des Formkörpers konkav gewölbt sind, wobei die Kugellaufbahnen tiefer ausgebildet sind als die Käfigbahnen.

Charakteristisch ist dabei die Einbringung der Innenkontur in einen bauchigen Bereich des Unterteils, das auf seiner der Nabe gegenüberliegenden Seite gewissermaßen eingeschnürt ist. D.h., der lichte Durchmesser in diesem Bereich ist kleiner als der Durchmesser im Scheitel des bauchigen Bereichs. An diese Einschnürung, also in Fortsetzung des bauchigen Bereichs, schließt sich ein sich konisch erweiternder Abschnitt als Schürze an, die abweichend davon auch radial nach außen ausgerichtet sein kann.

In der genannten gattungsbildenden Literatur ist zwar der Einsatz einer Ronde als Halbzeug erwähnt, jedoch sind weitere Angaben dazu nicht entnehmbar.

Bei dem bekannten Verfahren wird das glockenförmige Unterteil durch Pressen mittels eines geeigneten Presswerkzeuges oder durch Drücken mithilfe einer Drückrolle hergestellt, während die anschließende Innenkonturierung durch eine außenseitig konturierte Drückwalze erfolgt, mit der der bauchige Bereich des Unterteiles gegen ein mehrteiliges, Kontursegmente aufweisendes Innenkonturwerkzeug gedrückt wird.

Allerdings ist eine gewünschte und für den Einsatzzweck geforderte Maßgenauigkeit bei dem bekannten Verfahren nur mit einem erheblichen fertigungstechnischen Aufwand erreichbar, was insofern besonders nachteilig ist, als solche Formkörper als Serienteile in großen Stückzahlen hergestellt werden.

Aus der US 5 970 776 A ist die Herstellung eines glockenförmigen Formkörpers bekannt, mit im Sinne von Kugel- und Käfiglaufbahnen geformten Innenkonturen, die durch das Zusammenwirken innerer Kontursegmente mit äußeren Druckstücken geformt werden.

Mittels der dazu vorgesehenen Vorrichtung kann jedoch nur ein Formteil hergestellt werden, dessen Wandung, im Verhältnis zur Größe des bauchigen Bereiches, insbesondere des Durchmessers, sehr gering ist. Insoweit ist diese Literatur nicht geeignet, Hinweise auf einen Formkörper zu geben, der hinsichtlich seiner Belastbarkeit auch als Achs- bzw. Gelenkzapfen eingesetzt werden kann, unabhängig davon, dass eine wesentliche Konfiguration, nämlich die angeformte Nabe, dabei nicht vorgesehen ist.

Der Erfindung liegt die Aufgabe zugrunde, ein Verfahren der gattungsgemäßen Art so weiterzuentwickeln, dass die Maßgenauigkeit des Formkörpers und seine Verwendbarkeit verbessert wird.

Diese Aufgabe wird durch ein Verfahren mit den Merkmalen des Anspruchs 1 sowie durch eine Vorrichtung mit den Merkmalen des Anspruchs 4 zur Durchführung des Verfahrens gelöst.

Der Kern der Erfindung liegt darin, mittels jeweils mindestens einer Drückrolle sowohl die Nabe wie auch das glockenförmige Unterteil in eine Vorform zu bringen, bei der die Innenkonturen, d.h. die Käfig- und Kugellaufbahnen hinsichtlich ihrer Tiefe teilausgebildet sind.

Damit wird die Möglichkeit einer Zentrierung und Verdrehsicherung des Vorformlings für die nachfolgende Endbearbeitung erreicht, bei der dann die Innenkontur in ihr Endmaß gebracht wird.

Während bei der Vorformung des Unterteiles mittels der mindestens einen Drückrolle die äußere Mantelfläche des Unterteiles glattflächig bleibt, wird bei der Endformung, erfindungsgemäß mittels eines aus Gesenkteilen bestehenden Formgesenks die äußere Mantelfläche entsprechend dem Wölbungsverlauf der Innenkontur gleichfalls geformt, wobei sich die konkaven Wölbungen sowohl in Achsrichtung wie auch quer dazu der Kugellaufbahnen und der Käfigbahnen als konvexe Wölbungen an der äußeren Mantelfläche wiederfinden.

Nach einer vorteilhaften Weiterbildung des erfindungsgemäßen Verfahrens wird zur Formung der Nabe und/oder zur Herstellung des Vorformlings und/oder des Endformlings das Material erwärmt, vorzugsweise auf eine Temperatur von etwa 400° bis 1000°, vorzugsweise etwa 600°C bis 700°C.

Durch die genannte sozusagen Zwangszentrierung des Vorformlings bei der Weiterbearbeitung zu einem Endformling wird eine maßgenaue Fertigung der Innenkontur erreicht, die gleichermaßen die vorbestimmte Teilung, d.h. die Anordnung der Wälzkugellaufbahnen sowie der Käfigbahnen betrifft.

Überdies ist, gegenüber dem Stand der Technik, eine deutlich schnellere Fertigung des Formkörpers möglich, wobei die Nabe wahlweise als Hohl- oder Vollkörper ausgebildet sein kann.

Des Weiteren sind durch das Drückwalzen mittels der Drückrollen bis zur Fertigstellung des Vorformlings auch Unterteile mit im Verhältnis zum Durchmesser des Unterteiles relativ dicken Wänden möglich, so dass prinzipiell in jedem Fall ein belastungsoptimierter Formkörper zur Verfügung gestellt werden kann.

Eine Vorrichtung zur Durchführung des Verfahrens weist zur Ausbildung des Vorformlings ein erstes, drehbares inneres Konturwerkzeug auf, mit radial bewegbaren, separaten Kontursegmenten, die jeweils einer Kugellaufbahn und einer Käfigbahn zugeordnet sind und die in Funktionsstellung spaltfrei aneinander liegen.

Funktional sind die Kontursegmente zur Ausbildung des Vorformlings identisch mit denen zur Ausbildung des Endformlings und lediglich in ihrer maßlichen Konfiguration unterschiedlich.

Bis auf die Kontursegmente ist der Aufbau der Vorrichtung für beide Einsatzfälle vergleichbar. Im Gegensatz zum ersten, drehbaren Konturwerkzeug ist allerdings das zweite innere Konturwerkzeug verdrehfest gehalten.

Um das Unterteil, ob als Vorformling oder als Endformling von dem Konturwerkzeug abzunehmen, sind die Kontursegmente, wie erwähnt, radial nach innen, also zur Rotationsachse hin bewegbar und zwar mittels einer Zwangsführung. Hierzu sind die Kontursegmente an einem Konusring gehalten, der sich zur Nabe hin verjüngt und der außenseitig Gleitflächen aufweist, an denen sich die Kontursegmente abstützen.

Dieser Konusring ist axial relativ verschiebbar zu den Kontursegmenten wobei jedes Kontursegment eine hinterschnittene Längsnut aufweist, in der eine Kopfschraube oder ein mit dem Konusring verbundener Kulissenstein geführt ist.

Für eine behinderungsfreie Radialbewegung der nebeneinander liegenden, den Käfigbahnen und den Kugellaufbahnen zugeordneten Kontursegmenten, insbesondere der des zweiten Konturwerkzeugs sind die Führungsflächen des Konusringes, an denen die Kontursegmente für die Kugellaufbahnen anliegen, in ihrer Neigung flacher als die Führungsflächen, an denen sich die den Käfigbahnen zugeordneten Kontursegmente abstützen.

Die Kontursegmente sind radial zur Rotationsachse des Formkörpers hin so weit verfahrbar, dass das Unterteil, ob als Vorformling oder als Endformling, auch mit dem kleinsten lichten Durchmesser in dem den bauchigen Bereich begrenzenden Teil, an dem sich eine nach außen gerichtete konische Schürze anschließt, die Kontursegmente überfahren kann.

Die Vorrichtung zeichnet sich überdies durch ihre hohe Stabilität und Konzentrizität aufgrund der Ausbildung des oberen, der Nabe nahen Endes der Führungssäule aus, so dass die bei der Verformung der Ronde hin zu einem fertigen Formkörper auftretenden Kräfte problemlos aufgenommen werden können.

Weitere vorteilhafte Ausbildungen der Erfindung sind in den Unteransprüchen gekennzeichnet.

Das erfindungsgemäße Verfahren sowie Ausführungsbeispiele einer erfindungsgemäßen Vorrichtung werden nachfolgend anhand der beigefügten Zeichnungen nochmals beschrieben.

Es zeigen:
- Figur 1: einen Formkörper in einer perspektivischen Ansicht
- Figur 2: einen Längsschnitt durch eine erste Ausführungsvariante einer erfindungsgemäßen Vorrichtung zur Ausbildung eines Vorformlings gemäß der Linie B-B in Figur 3,
- Figur 3: einen Querschnitt durch die Vorrichtung nach Figur 2 gemäß der Linie A-A,
- Figur 4: einen Längsschnitt durch die Vorrichtung zur Ausbildung des Endformlings, entsprechend der Linie B-B,
- Figur 5: einen Querschnitt durch die Vorrichtung gemäß der Linie C-C in Figur 4,
- Figur 6: einen Längsschnitt durch eine zweite Ausführungsvariante einer erfindungsgemäßen Vorrichtung zur Ausbildung eines Vorformlings gemäß der Linie B-B in Figur 7,
- Figur 7: einen Querschnitt durch die Vorrichtung nach Figur 6 gemäß der Linie A-A
- Figur 8: einen Längsschnitt durch die zweite Ausführungsvariante der Vorrichtung zur Ausbildung des Endformlings, entsprechend der Linie B-B in Figur 9
- Figur 9: einen Querschnitt durch die Vorrichtung gemäß der Linie C-C in Figur 8.

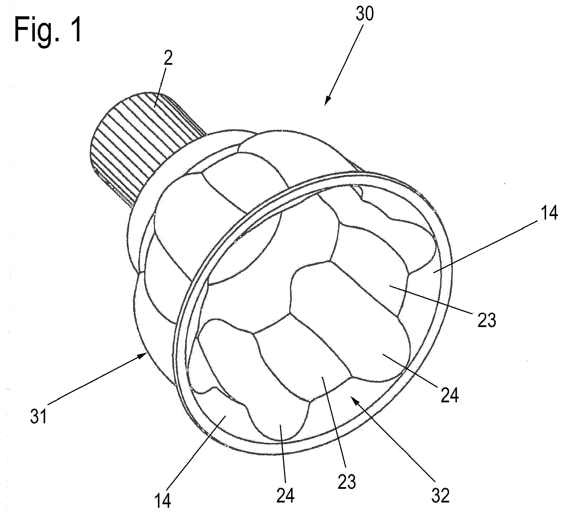

In der Figur 1 ist ein im Wesentlichen rotationssymmetrischer Formkörper 30 dargestellt, mit einer Nabe 2 und einem sich daran anschließenden, spanlos angeformten Unterteil 31.

Ein solcher bereits aus dem Stand der Technik bekannter Formkörper 30 weist in seinem Unterteil 31 eine Innenkontur 32 auf, bestehend aus Kugellaufbahnen 24, zwischen denen jeweils eine Käfigbahn 23 ausgebildet ist, wobei die Kugellaufbahnen 24 und die Käfigbahnen 23 gleichmäßig über dem Umfang des Unterteiles 31 verteilt sind.

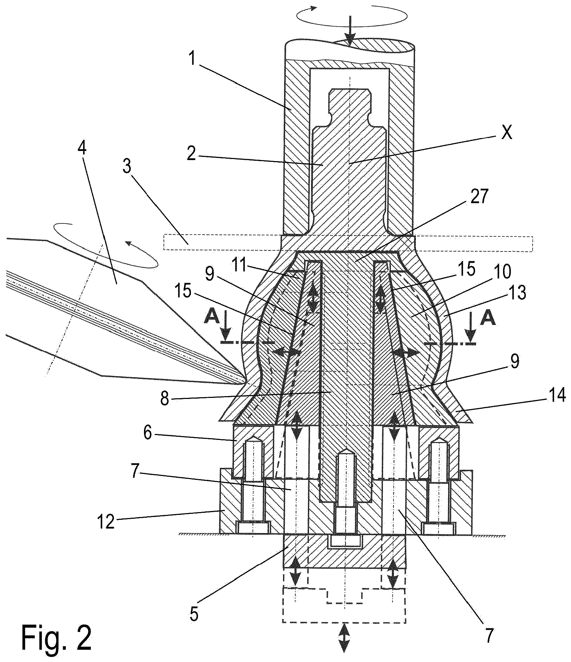

Die Käfigbahnen 23 und die Kugellaufbahnen 24 sind in axialer Richtung, bezogen auf eine Achse X, konkav gewölbt, ebenso quer dazu. Erkennbar ragen die Kugellaufbahnen 24 bis in einen unteren, der Nabe 2 gegenüberliegenden Endbereich des Unterteiles, während die Käfigbahnen 23 kürzer als die Kugellaufbahnen 24 bis in den Bereich einer Schürze 14 reichen, die im Beispiel, wie insbesondere die Figur 2 sehr deutlich wiedergibt, sich konisch nach außen erweitert. Denkbar ist auch, die Schürze 14 bis in eine radiale Ausrichtung zu formen.

In der Figur 2 ist erkennbar, dass aus einer gestrichelt abgebildeten rotierenden - vorzugsweise ebenen - Ronde 3 aus Metall mittels mindestens einer drehbaren Drückrolle, die in das Material der Ronde eingetaucht wird und sodann radial von außen nach innen verfahren wird, so dass unter Dickenreduzierung der Ronde 3 eine Nabe 2 angeformt wird.

Zur Weiterbearbeitung, d.h. zur Ausformung des Unterteiles 31, zunächst als Vorformling 13, ist die Ronde 3 durch einen Vorsetzer 1 als Spannelement gegen eine axial festgesetzte, in einer Basisplatte 12 gehaltene Führungssäule 8 gedrückt, die gleichzeitig Zentrierfunktion übernimmt. Dabei weist die Führungssäule 8 an ihrem der Nabe zugewandten Ende einen Auflageteller 27 auf, an dem sich die Ronde 3 abstützt.

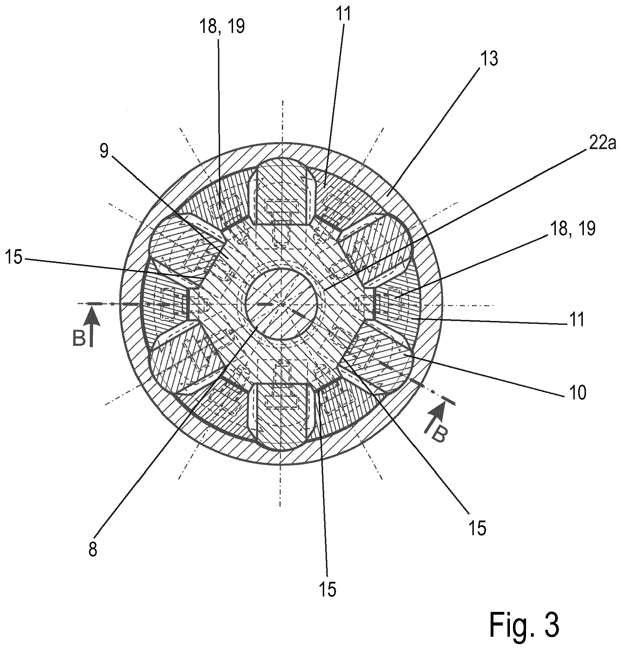

Die Führungssäule 8 ist Bestandteil eines ersten inneren Konturwerkzeugs, das überdies einen Konusring 9 aufweist, der verdrehsicher, jedoch axial verschiebbar an der Führungssäule 8 gehalten ist. Die Verdrehsicherung erfolgt dabei, wie in Figur 3 zu erkennen, vorzugsweise durch eine Passverzahnung 22A, auch als Spline-Verbindung bezeichnet, zwischen Führungssäule 8 und Konusring 9, um das bei diesem Arbeitsschritt auftretende hohe Drehmoment aufnehmen zu können.

Mittels mindestens einer Drückrolle 4 wird der sich radial an die Nabe 2 anschließende Planbereich der Ronde 3 gegen das erste innere Konturwerkzeug, d.h. gegen Kontursegmente 10, 11 des ersten inneren Konturwerkzeug gedrückt, wobei die Drückrolle 4 radial und axial zugestellt wird. Das erste innere Konturwerkzeug dreht sich dabei mit der Ronde 3.

Dadurch wird ein Vorformling 13 geschaffen, dessen äußere Mantelfläche lediglich in axialer Richtung konturiert ist, entsprechend der Abbildung in Figur 2. Innenseitig jedoch sind durch die Kontursegmente 10, 11 Käfigbahnen 23 und Kugellaufbahnen 24 vorgeformt, d.h. lediglich in ihrem axialen Konturenverlauf, nicht jedoch hinsichtlich ihrer Breite und Tiefe dem Endformling entsprechend, was besonders deutlich der Figur 3 zu entnehmen ist.

Nach Beendigung des Einsatzes der Drückrolle 4, die im Übrigen gegen die rotierende Ronde 3 bzw. den Vorformling 13 gedrückt wird, wird der Konusring 9 in Pfeilrichtung nach unten verfahren, in eine Stellung entsprechend der gestrichelten Abbildung, wobei der Konusring 9 über axial bewegliche Druckstempel 7 mit einer Druckplatte 5 verbunden ist.

Die Führungssäule 8 hingegen ist in einer Basisplatte 12 befestigt, die ortsfest gehalten ist und an der ein Auflagering 6 befestigt ist, der als Widerlager für die Kontursegmente 10, 11 dient, wenn der Konusring 9 nach unten, d.h. in die der Nabe 2 abgewandte Richtung gezogen wird.

Wie bereits erwähnt, werden mit der axialen Verschiebung des Konusringes 9 in eine Endformstellung die Kontursegmente 10, 11 radial in Richtung der Führungssäule 8 bewegt, wozu in Führungsflächen 27 des Konusringes 9, auf denen die Kontursegmente 10, 11 verschieblich gelagert sind, jeweils ein Kulissenstein 18 befestigt ist, der in eine Kulissenführung 19 des jeweiligen Kontursegmentes 10, 11 eingreift. Dieser Kulissenstein 18 kann beispielsweise aus einer Kopfschraube bestehen.

Durch die radiale Verschiebung der Kontursegmente 10, 11 in eine in der Figur 2 gestrichelte Stellung wird der Vorformling 13 gegenüber dem Konturwerkzeug so weit frei gelegt, dass er problemlos entnehmbar ist.

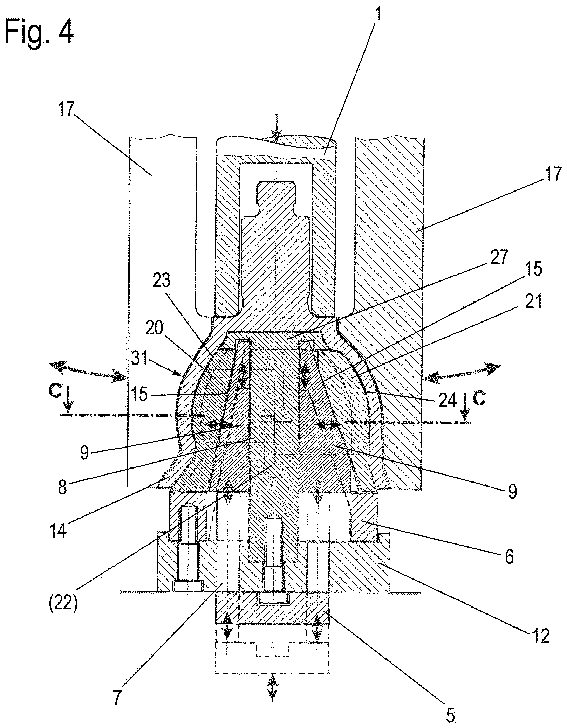

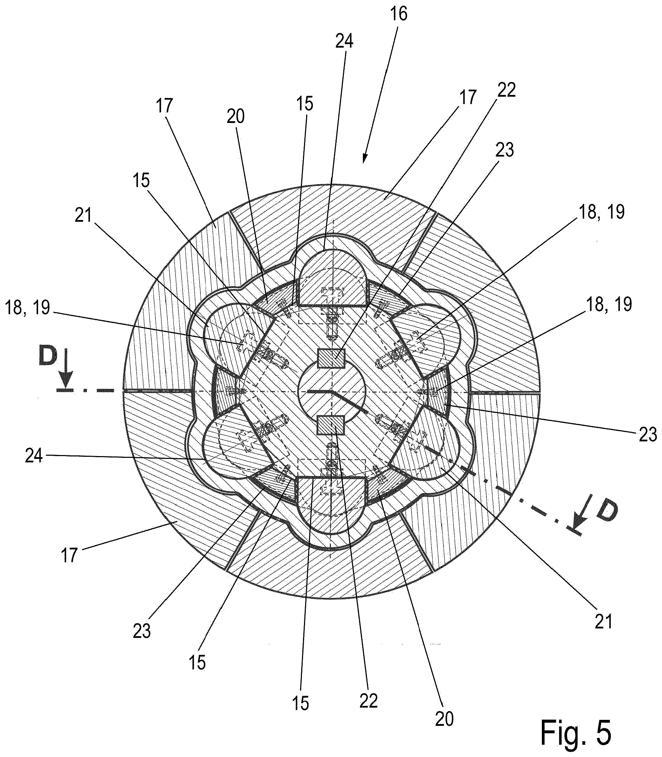

In einem folgenden Verfahrensschritt wird der Vorformling 13 zu einem Endformling, nämlich dem Unterteil 30 weiter bearbeitet. Dieser Verfahrensschritt ist in den Figuren 4 und 5 abgebildet.

Prinzipiell ist der Aufbau des zweiten inneren Konturwerkzeugs vergleichbar dem des ersten inneren Konturwerkzeugs zur Ausbildung des Vorformlings 13. Hierbei kommen allerdings Kontursegmente 20, 21 zum Einsatz, die hinsichtlich ihrer Bemaßung von den Kontursegmenten 10, 11 des ersten inneren Konturwerkzeugs abweichen und zwar derart, dass Kugellaufbahnen 24 und Käfigbahnen 23 ihre Endform erhalten.

Zu deren Ausprägung sind an die äußere Mantelfläche des Vorformlings 13 radial zustellbare Gesenkteile 17 vorgesehen, die segmentartig Bestandteil eines Gesenks 16 sind und die an die äußere Mantelfläche des nun nicht rotierenden Vorformlings 13 angedrückt werden, wobei die Gesenkteile 17, von denen jeweils eins einer Kugellaufbahn 24 zugeordnet ist, eine der konvexen Ausbildung des Kontursegmentes 21 angepasste konkave Ausformung aufweist, so dass sich eine entsprechende Außenkontur des das Unterteil 31 bildenden Endformlings ergibt.

Zum Aufsetzen des Vorformlings 13 auf das zweite innere Konturwerkzeug sind die Kontursegmente 20, 21 in einer Nichtfunktionsstellung gehalten, d.h., der Konusring 9 ist in eine gegenüber der Führungssäule 8 in Richtung der Basisplatte verschobene Endstellung gebracht, bei zwangsweiser radialer Bewegung nach innen zur Führungssäule 8 hin der Kontursegmente 20, 21.

Nach einem Aufsetzen des Vorformlings 13 auf die endseitig als Auflageteller 27 ausgeformte Führungssäule 8 wird der Konusring 9 in Richtung der Nabe 2 bzw. des angeformten Auflagetellers 27 der Führungssäule 8 verschoben und durch die im Sinne eines Keiles wirkenden Konusflächen werden die Kontursegmente 20, 21 in eine Endstellung verfahren, in der diese spaltfrei oder nahezu spaltfrei aneinander liegen.

Zur Verdrehsicherung des Konusringes 9 mit der Führungssäule 8 sind, wie die Figur 5 deutlich wiedergibt, Passfedern 22 vorgesehen, die in die Führungssäule 8 und den Konusring 9 eingreifen.

Durch Andrücken der Gesenkteile 17, entsprechend der Pfeilrichtung in Figur 4, werden die Kugellaufbahnen 24 und die Käfigbahnen 23 ausgebildet.

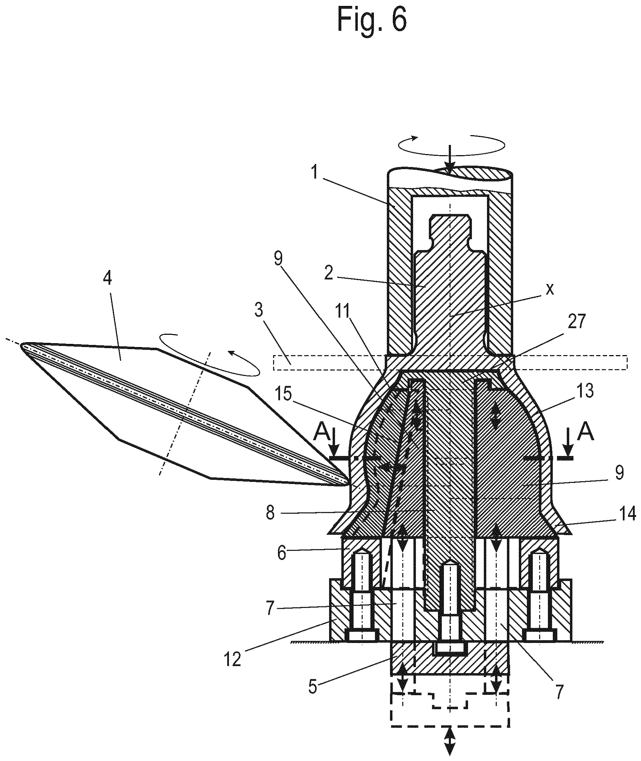

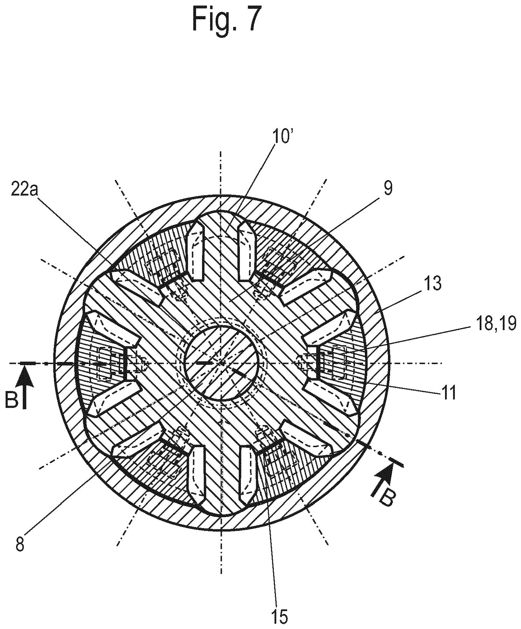

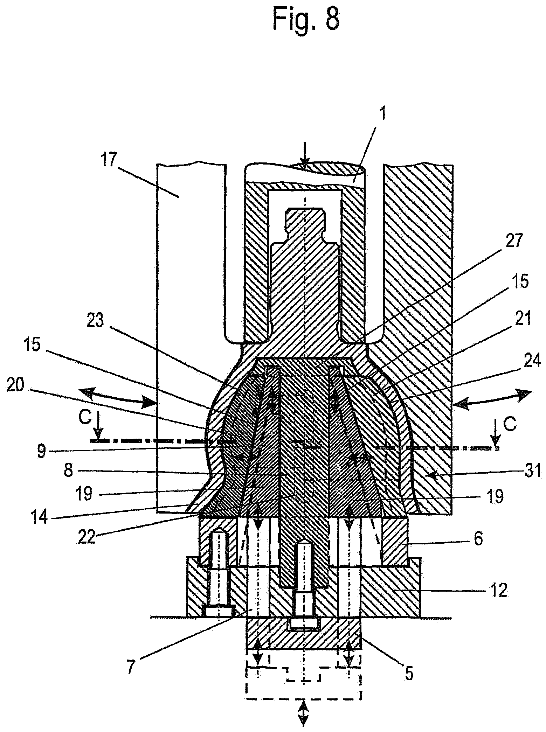

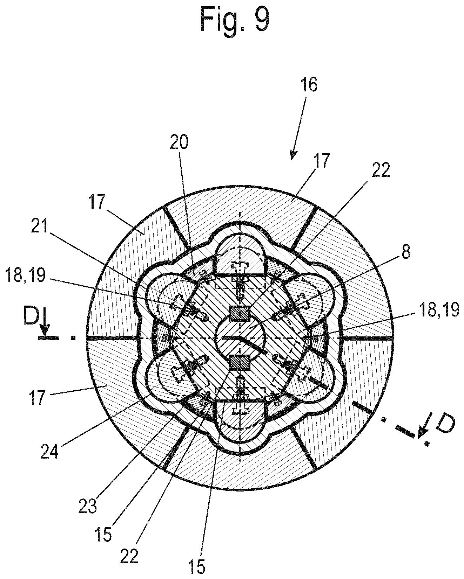

In den Figuren 6 bis 9 ist eine alternative Ausführungsvariante einer erfindungsgemäßen Vorrichtung gezeigt. Im Unterschied zur Vorrichtung gemäß den Figuren 2 bis 5 ist bei dem ersten inneren Konturwerkzeug das Kontursegment 10' zur Ausbildung der Kugellaufbahnen 24 einstückig mit dem Konusring 9 ausgebildet.

Wie des Weiteren in Figur 6 erkennbar ist, wird auch bei dieser Variante der sich radial an die Nabe 2 anschließende Planbereich der Ronde 3 gegen das erste innere Konturwerkzeug, d.h. gegen Kontursegmente 10', 11 des ersten inneren Konturwerkzeug gedrückt, wobei die Drückrolle 4 radial und axial zugestellt wird. Die Formgestalt der Kontursegmente 10' ist hier dergestalt, dass der Radius der Mantelfläche der Kontursegmente 10' sich axial zur Drehachse der Führungssäule 8 nach oben, sprich entgegen der Endformrichtung, nie zunimmt, sondern nach oben abnehmend oder gleichbleibend ausgebildet ist, so dass nach erfolgtem Andrücken der Ronde 3 gegen das erste innere Konturwerkzeug der Vorformling 13 gegenüber dem Konturwerkzeug problemlos entnehmbar ist.

Dadurch wird ein Vorformling 13 geschaffen, dessen äußere Mantelfläche lediglich in axialer Richtung konturiert ist, entsprechend der Abbildung in Figur 2.

Für eine vereinfachte Bearbeitung, insbesondere hinsichtlich der Materialverformung, kann die Ronde bzw. kann der Vorformling, wie bereits ausgeführt, erwärmt werden. Um die Standzeit der beteiligten Werkzeuge bei der Verformung zu erhöhen, können diese gekühlt werden, wobei entsprechende Kühlkanäle vorgesehen sein können.

### Bezugszeichenliste

- 1: Vorsetzer
- 2: Nabe
- 3: Ronde
- 4: Drückrolle
- 5: Druckplatte
- 6: Auflagering
- 7: Druckstempel
- 8: Führungssäule
- 9: Konusring
- 10: Kontursegment
- 10': Kontursegment
- 11: Kontursegment
- 12: Basisplatte
- 13: Vorformling
- 14: Schürze
- 15: Führungsfläche
- 16: Gesenk
- 17: Gesenkteil
- 18: Kulissenstein
- 19: Längsnut
- 20: Kontursegment
- 21: Kontursegment
- 22: Passfeder
- 22A: Spline-Verbindung
- 23: Käfigbahn
- 24: Kugellaufbahn

- 27: Auflage- und Zentrierteller

- 30: Formkörper
- 31: Unterteil
- 32: Innenkontur

## Patentansprüche

1. Verfahren zur Herstellung eines eine Nabe (2) und ein sich axial daran anschließendes glockenförmiges Unterteil (31) aufweisenden, aus Metall, insbesondere Stahl bestehenden Formkörpers (30), wobei in das Unterteil (31) durch spanloses Formen in einen bauchig gewölbten Bereich eine Innenkontur eingebracht wird, bestehend aus umfänglich wechselweise angeordneten, in Achsrichtung konkaven Käfigbahnen (23) und Kugellaufbahnen (24) zur Aufnahme von Wälzkörpern, wobei die Tiefe der Käfigbahnen (23) geringer ist als die der Kugellaufbahnen (24), **gekennzeichnet durch** folgende nacheinander durchgeführte Verfahrensschritte:
a) mittels mindestens einer drehbaren Drückrolle (4) wird aus einer rotierenden Ronde (3) unter deren Dickenreduzierung die Nabe (2) geformt,
b) ein sich radial an die Nabe (2) anschließender Planbereich der Ronde (3) wird zur Ausbildung eines Vorformlings (13) des Unterteiles (31) mittels mindestens einer axial und radial bewegten Drückrolle (4) an Kontursegmente (10, 10', 11) eines rotierenden ersten inneren Konturwerkzeugs gedrückt, unter Teilausbildung der Innenkontur, und
c) der fest stehende Vorformling (13) wird durch ein aus Teilgesenken (17) bestehendes Gesenk (16) gegen Kontursegmente (20, 21) eines zweiten inneren Konturwerkzeugs gedrückt, unter Vollausbildung der Käfigbahnen (23) und Kugellaufbahnen (24).

2. Verfahren nach Anspruch 1, **dadurch gekennzeichnet, dass** die Kontursegmente (10, 11, 20, 21) nach der Teilausbildung und nach der Vollausbildung der jeweiligen Innenkontur radial zur Achse (X) hin außerhalb des Überdeckungsbereichs mit dem Unterteil (31) bewegt werden.

3. Verfahren nach Anspruch 1 oder 2, **dadurch gekennzeichnet, dass** die Ronde (3) zur Anformung der Nabe (2) und/oder zur Ausbildung des Vorformlings (13) und/oder der Vorformling (13) zur Endausbildung des Unterteils (31) erwärmt wird, auf eine Temperatur von etwa 400° - 1000°C, vorzugsweise auf 400° - 600°C.

4. Vorrichtung zur Durchführung des Verfahrens nach einem der vorstehenden Ansprüche, **gekennzeichnet durch** ein erstes drehbares inneres und ein zweites fest stehendes inneres Konturwerkzeug, die jeweils zur Ausprägung der Kugellaufbahnen (24) und der Käfigbahnen (23) separate, radial zwangsbewegliche Kontursegmente (10, 10', 11, 20, 21) aufweisen und dem ersten Konturwerkzeug mindestens eine radial und axial zustellbare Drückrolle und dem zweiten Konturwerkzeug ein radial zustellbares Gesenk (16) zugeordnet sind, wobei die Kontursegmente (10, 10', 11) des ersten Konturwerkzeugs konvexe Abschnitte zur Ausbildung der Kugellaufbahnen (24) und der Käfigbahnen (23) des Vorformlings (13) und die Kontursegmente (20, 21) des zweiten Konturwerkzeugs konvexe Abschnitte zur Ausbildung der Kugellaufbahnen (24) und der Käfigbahnen (23) des einen Endformling bildenden Unterteils (31) aufweisen und zumindest im Bereich des ersten Konturwerkzeugs ein Spannelement zum verdrehsicheren Einspannen der mit einer Nabe (2) versehenen Ronde (3) vorgesehen ist.

5. Vorrichtung nach Anspruch 4, **dadurch gekennzeichnet, dass** die Kontursegmente (10, 10', 11, 20, 21) in Funktionsstellung spaltfrei aneinander liegen.

6. Vorrichtung nach Anspruch 4 oder 5, **dadurch gekennzeichnet, dass** die Kontursegmente (10, 11, 20, 21) an einem sich in Richtung der Nabe (2) verjüngenden Konusring (9) anliegen, wobei der Konusring (9) axial beweglich ist.

7. Vorrichtung nach einem der Ansprüche 4-6, **dadurch gekennzeichnet, dass** die Kontursegmente (10, 11, 20, 21) und Führungsflächen (15) des Konusrings (9) miteinander korrespondierende Führungselemente aufweisen, von denen eines als Kulissenstein (18) und das andere als hinterschnittene Längsnut (19) ausgebildet ist.

8. Vorrichtung nach Anspruch 4 oder 5, **dadurch gekennzeichnet, dass** das Kontursegment (10') des ersten Konturwerkzeugs zur Ausbildung der Kugellaufbahnen (24) einstückig mit dem Konusring (9) ausgebildet ist.

9. Vorrichtung nach einem der Ansprüche 4-8, **dadurch gekennzeichnet, dass** der Konusring (9) axial verschieblich und verdrehgesichert an einer Führungssäule (8) gehalten ist.

10. Vorrichtung nach einem der Ansprüche 4-8, **dadurch gekennzeichnet, dass** die Führungssäule (8) auf ihrer der Nabe (2) zugewandten Seite einen Auflage- und Zentrierteller (27) aufweist.

11. Vorrichtung nach einem der Ansprüche 4-9, **dadurch gekennzeichnet, dass** die in Achsrichtung als Schräge ausgebildeten Führungsflächen (15) zumindest der Kontursegmente (20, 21) des zweiten Konturwerkzeugs in ihrer Neigung unterschiedlich sind.

12. Vorrichtung nach einem der Ansprüche 4-10, **dadurch gekennzeichnet, dass** der Neigungswinkel, der die Kugellaufbahn (24) bildenden Kontursegmente (21), bezogen auf die Achse (X) größer ist als der Neigungswinkel der die Käfigbahnen (23) ausbildenden Kontursegmente (20).

13. Vorrichtung nach einem der Ansprüche 4-11, **dadurch gekennzeichnet, dass** das Gesenk (16) aus mehreren Gesenkteilen (17) besteht, die radial zustellbar sind.

14. Vorrichtung nach einem der Ansprüche 4-12, **dadurch gekennzeichnet, dass** jedem Kontursegment (21) ein Gesenkteil (17) zugeordnet ist.

15. Vorrichtung nach einem der Ansprüche 4-13, **dadurch gekennzeichnet, dass** die Kontursegmente (10, 11, 20, 21) gegenüber dem Konusring (9) axial gesichert gehalten sind.

## Claims

1. Method for producing a molded body (30) consisting of metal, in particular a steel molded body (30), having a hub (2) and an axially adjacent bell-shaped lower part (31), wherein an inner contour is introduced into the lower part (31) by non-cutting shaping in a bulbous curved area, consisting of circumferentially alternately arranged cage raceways (23) which are concave in the axial direction and ball raceways (24) for receiving rolling elements, wherein the depth of the cage raceways (23) is lower than that of the ball raceways (24), **characterized by the** following successively performed method steps:
a) by means of at least one rotatable pressure roller (4), the hub (2) is formed from a rotating round blank (3) with the thickness thereof being reduced,
b) a plan area of the round blank (3) radially adjoining the hub (2) is pressed onto contour segments (10, 10', 11) of a rotating first inner contour tool to form a preform (13) of the lower part (31) by means of at least one axially and radially moved pressure roller (4), with partial forming of the inner contour, and
c) the stationary preform (13) is pressed against contour segments (20, 21) of a second inner contour tool by a die (16) consisting of partial dies (17), with full formation of the cage raceways (23) and ball raceways (24).

2. Method according to claim 1, **characterized in that** the contour segments (10, 11, 20, 21) are moved after the partial formation and after the full formation of the respective inner contour radially towards the axis (X) outside the overlap area with the lower part (31).

3. Method according to claim 1 or 2, **characterized in that** the round blank (3) for integrally forming the hub (2) and/or for forming the preform (13) and/or the preform (13) for the final formation of the lower part (31) is heated to a temperature of about 400° - 1000°C, preferably to 400° - 600°C.

4. Device for carrying out the method according to one of the preceding claims, **characterized by** a first rotatable inner and a second fixed inner contour tool, which each comprise separate, radially forcibly movable contour segments (10, 10', 11, 20, 21) for the embossment of the ball raceways (24) and the cage raceways (23), and the first contour tool is assigned at least one radially and axially advanceable pressure roller and the second contour tool is assigned a radially advanceable die (16), wherein the contour segments (10, 10', 11) of the first contour tool have convex portions for forming the ball raceways (24) and the cage raceways (23) of the preform (13) and the contour segments (20, 21) of the second contour tool have convex portions for forming the ball raceways (24) and the cage raceways (23) of the lower part (31) forming the final molded body, and at least in the region of the first contour tool a clamping element is provided for non-rotational clamping of the round blank (3) provided with a hub (2).

5. Device according to claim 4, **characterized in that** the contour segments (10, 10', 11, 20, 21) abut in a gap-free manner against each other in the functional position.

6. Device according to claim 4 or 5, **characterized in that** the contour segments (10, 11, 20, 21) abut against a cone ring (9) tapering in the direction of the hub (2), wherein the cone ring (9) is axially movable.

7. Device according to one of claims 4 to 6, **characterized in that** the contour segments (10, 11, 20, 21) and guide surfaces (15) of the cone ring (9) have mutually corresponding guide elements, one of which is formed as a sliding block (18) and the other is formed as an undercut longitudinal groove (19).

8. Device according to claim 4 or 5, **characterized in that** the contour segment (10') of the first contour tool is formed integrally with the cone ring (9) for forming the ball raceways (24).

9. Device according to one of the claims 4 to 8, **characterized in that** the cone ring (9) is held axially displaceable and secured against rotation on a guide column (8).

10. Device according to one of the claims 4to 8, **characterized in that** the guide column (8) has a support and centering plate (27) on its side facing the hub (2).

11. Device according to one of the claims 4 to 9, **characterized in that** the guide surfaces (15) of at least the contour segments (20, 21) of the second contour tool, said guide surfaces (15) being formed as a bevel in the axial direction, are different in their inclination.

12. Device according to one of the claims 4 to 10, **characterized in that** the angle of inclination of the contour segments (21) forming the ball raceway (24), relative to the axis (X), is greater than the inclination angle of the contour segments (20) forming the cage raceways (23).

13. Device according to one of the claims 4 to 11, **characterized in that** the die (16) consists of a plurality of die parts (17) which are radially advanceable.

14. Device according to one of the claims 4 to 12, **characterized in that** each contour segment (21) is assigned a die part (17).

15. Device according to one of the claims 4 to 13, **characterized in that** the contour segments (10, 11, 20, 21) are held axially secured relative to the cone ring (9).

## Revendications

1. Procédé pour la fabrication d'un corps mis en forme (30) en métal, en particulier en acier, présentant un moyeu (2) et une partie inférieure (31) en forme de cloche s'y raccordant, dans lequel est formé par formage sans enlèvement de matière dans la partie inférieure (31), dans une zone convexe renflée, un contour intérieur composé de pistes de cage (23) et de pistes de roulement à billes (24) concaves dans le sens de l'axe et disposées alternativement sur la circonférence pour recevoir des corps de roulement, la profondeur des pistes de cage (23) étant inférieure à celle des pistes de roulement à billes (24), **caractérisé en ce qu'**il comprend les étapes de procédé suivantes, exécutées successivement :
a) formage du moyeu (2) au moyen d'au moins un rouleau presseur (4) rotatif à partir d'un flan circulaire (3) en rotation en réduisant l'épaisseur de celui-ci,
b) pressage d'une zone plane du flan circulaire (3) se raccordant au moyeu (2) dans le sens radial pour former une ébauche (13) de la partie inférieure (31) au moyen d'au moins un rouleau presseur (4) déplacé dans le sens axial et radial sur des segments de contour (10, 10', 11) d'un premier outil de contour intérieur en rotation en formant partiellement le contour intérieur, et
c) pressage de l'ébauche (13) immobile par une matrice (16) formée de parties de matrice (17) contre des segments de contour (20, 21) d'un deuxième outil de contour intérieur en formant complètement les pistes de cage (23) et les pistes de roulement à billes (24).

2. Procédé selon la revendication 1, **caractérisé en ce qu'**après la formation partielle et après la formation complète du contour intérieur correspondant, les segments de contour (10, 11, 20, 21) sont déplacés dans le sens radial vers l'axe (X) en dehors de la zone de recouvrement avec la partie inférieure (31).

3. Procédé selon la revendication 1 ou 2, **caractérisé en ce que** le flan circulaire (3) est chauffé pour former le moyeu (2) et/ou former l'ébauche (13) et/ou l'ébauche (13) pour la formation finale de la partie inférieure (31) à une température d'environ 400 °C à 1000 °C, de préférence de 400 °C à 600 °C.

4. Dispositif pour la mise en œuvre du procédé selon l'une des revendications principales, **caractérisé en ce qu'**il comprend un premier outil de contour intérieur rotatif et un deuxième outil de contour intérieur fixe qui présentent chacun, pour matricer les pistes de roulement à billes (24) et les pistes de cage (23), des segments de contour (10, 10', 11, 20, 21) séparés et capables d'un mouvement forcé, et le premier outil de contour est associé à au moins un rouleau presseur déplaçable dans le sens radial et axial et le deuxième outil de contour à une matrice (16) pouvant être approchée dans le sens radial, les segments de contour (10, 10', 11) du premier outil de contour présentant des parties convexes pour former les pistes de roulement à billes (24) et les pistes de cage (23) de l'ébauche (13) et les segments de contour (20, 21) du deuxième outil de contour des parties convexes pour former les pistes de roulement à billes (24) et les pistes de cage (23) des partie inférieures (31) formant une ébauche finale et un élément de serrage étant prévu au moins au niveau du premier outil de contour pour le serrage immobile en rotation du flan circulaire (3) pourvu d'un moyeu (2).

5. Dispositif selon la revendication 4, **caractérisé en ce que** les segments de contour (10, 10', 11, 20, 21) reposent les uns contre les autres sans interstice dans la position de fonctionnement.

6. Dispositif selon la revendication 4 ou 5, **caractérisé en ce que** les segments de contour (10, 11, 20, 21) reposent sur une bague conique (9) qui se resserre en direction du moyeu (2), laquelle bague conique (9) est mobile dans le sens axial.

7. Dispositif selon l'une des revendications 4 à 6, **caractérisé en ce que** les segments de contour (10, 11, 20, 21) et des surfaces de guidage (15) de la bague conique (9) présentent des éléments de guidage qui se correspondent l'un à l'autre, dont l'un est conformé comme un coulisseau (18) et l'autre comme une gorge longitudinale (19) en contre-dépouille.

8. Dispositif selon la revendication 4 ou 5, **caractérisé en ce que** le segment de contour (10') du premier outil de contour est conçu d'un seul tenant avec la bague conique (9) pour former les pistes de roulement à billes (24).

9. Dispositif selon l'une des revendications 4 à 8, **caractérisé en ce que** la bague conique (9) est retenue sur un montant de guidage (8) avec possibilité de translation axiale et immobilisée en rotation.

10. Dispositif selon l'une des revendications 4 à 8, **caractérisé en ce que** le montant de guidage (8) présente sur son côté orienté vers le moyeu (2) un plateau d'appui et de centrage (27).

11. Dispositif selon l'une des revendications 4 à 9, **caractérisé en ce que** les surfaces de guidage (15) conformées comme un biseau dans le sens de l'axe des segments de contour (20, 21), au moins, du deuxième outil de contour sont différentes par leur inclinaison.

12. Dispositif selon l'une des revendications 4 à 10, **caractérisé en ce que** l'angle d'inclinaison des segments de contour (21) formant la piste de roulement à billes (24) par rapport à l'axe (X) est plus grand que celui des segments de contour (20) formant les pistes de cage (23).

13. Dispositif selon l'une des revendications 4 à 11, **caractérisé en ce que** la matrice (16) se compose de plusieurs parties de matrice (17) qui peuvent être approchées dans le sens radial.

14. Dispositif selon l'une des revendications 4 à 12, **caractérisé en ce que** chaque segment de contour (21) est associé à une partie de matrice (17).

15. Dispositif selon l'une des revendications 4 à 13, **caractérisé en ce que** les segments de contour (10, 11, 20, 21) sont retenus avec une fixation axiale par rapport à la bague conique (9).
